# EUROPEAN PATENT APPLICATION

(11) **EP 2 595 272 A2**
(43) Date of publication of application: **22.05.2013**
(21) Application number: 12192670.3
(22) Date of filing: 14.11.2012
(51) Int. Cl.: H02J 7/00

(54) **Methods and systems for a reliable automatic reserve battery switch**

(30) Priority: 16.11.2011 US 201113297761
(71) Applicant: Sondex Wireline Limited, Cody Technology Park Farnborough Hampshire GU14 0FG (GB)
(72) Inventor: Wootten, Keith Robert, Farnborough, Hampshire GU14 0FG (GB)
(74) Representative: Illingworth-Law, William Illingworth

(57) **Abstract**

Systems and methods according to these exemplary embodiments provide for a circuit 10 for switching from a first battery 12 to a second battery 14. The circuit includes: the first battery 12 configured to provide electrical energy to a device when a first reed switch 16 is closed; the second battery 14 configured to provide electrical energy to the device when a second reed switch 18 is closed; the first reed switch electrically connected to the first battery and configured to close when proximate a magnet 30; the second reed switch electrically connected to the second battery and configured to close when proximate the magnet; and the magnet configured to be moved from a position proximate the first reed switch to a position proximate the second reed switch.

## Description

### TECHNICAL FIELD

The present invention relates generally to methods and systems and, more particularly, to mechanisms and techniques for switching from a first battery to a second battery.

### BACKGROUND

Downhole measurement equipment has been used for scientific operations in, for example, the oil industry. This measurement equipment, or other equipment, is typically lowered into a hole which has been drilled into the ground. Power can be supplied to the equipment by a power supply located outside of the hole via a power cable or by a power supply located within the equipment. The determination for which type of equipment to be used, e.g., externally powered or internally powered, can be based on a variety of environmental factors and/or the equipment itself. The measurements obtained by such equipment can be used for assisting in determining the location of hydrocarbons and other information associated with the surrounding geological formations.

Some conventional internally powered equipment for downhole operations use a single lithium battery pack. Each time the device is removed from the well the used battery is removed and replaced by a new battery. This can be expensive because the used battery may still have significant charge left within it for other uses which can lead to a greater quantity of batteries used than may be needed.

One solution to this would be to use one or more microprocessors to monitor voltage of the battery (or batteries) in the downhole equipment. However, solutions which tend to use microprocessors and their associated circuitry are fairly complex and may not be suitable to the often rugged environments found downhole, e.g., high temperatures and pressures.

Accordingly, it would be desirable to have other methods and systems to simply and reliably improve battery use in downhole equipment.

### SUMMARY

According to an exemplary embodiment there is a circuit for switching from a first battery to a second battery, the circuit includes: the first battery configured to provide electrical energy to a device when a first reed switch is closed; the second battery configured to provide electrical energy to the device when a second reed switch is closed; the first reed switch electrically connected to the first battery and configured to close when proximate a magnet; the second reed switch electrically connected to the second battery and configured to close when proximate the magnet; and the magnet configured to be moved from a position proximate the first reed switch to a position proximate the second reed switch.

According to another exemplary embodiment, there is a method for switching from a first battery to a second battery, the method includes: providing, by the first battery, electrical energy to a device when a first reed switch is closed; providing, by the second battery, electrical energy to a device when a second reed switch is closed; closing the first reed switch when proximate a magnet, wherein the first reed switch is electrically connected to the first battery; closing the second reed switch when proximate the magnet, wherein the second reed switch is electrically connected to the second battery; and moving the magnet from a position proximate the first reed switch to a position proximate the second reed switch.

According to another exemplary embodiment, there is a device configured to operate in a well hole, the device includes: a circuit, the circuit includes: a first battery configured to provide electrical energy to the device when a first reed switch is closed; a second battery configured to provide electrical energy to the device when a second reed switch is closed; the first reed switch electrically connected to the first battery and configured to close when proximate a magnet; the second reed switch electrically connected to the second battery and configured to close when proximate the magnet; and the magnet configured to be moved from a position proximate the first reed switch to a position proximate the second reed switch; a measurement device configured to take measurements in the well hole; and a memory configured to store the measurements.

### BRIEF DESCRIPTION OF THE DRAWINGS

The accompanying drawings illustrate exemplary embodiments, wherein:
Figure 1 depicts a well hole environment for a downhole equipment according to exemplary embodiments;
Figure 2 illustrates a circuit according to exemplary embodiments;
Figure 3 shows a bi-metallic switch in a closed position according to exemplary embodiments;
Figure 4 illustrates a bi-metallic switch in an open position according to exemplary embodiments;
Figure 5 shows a downhole measurement device according to exemplary embodiments;
Figure 6 shows a flowchart of a method according to exemplary embodiments.

### DETAILED DESCRIPTION

The following detailed description of the exemplary embodiments refers to the accompanying drawings. The same reference numbers in different drawings identify the same or similar elements. Additionally, the drawings are not necessarily drawn to scale.

Also, the following detailed description does not limit the invention. Instead, the scope of the invention is defined by the appended claims.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

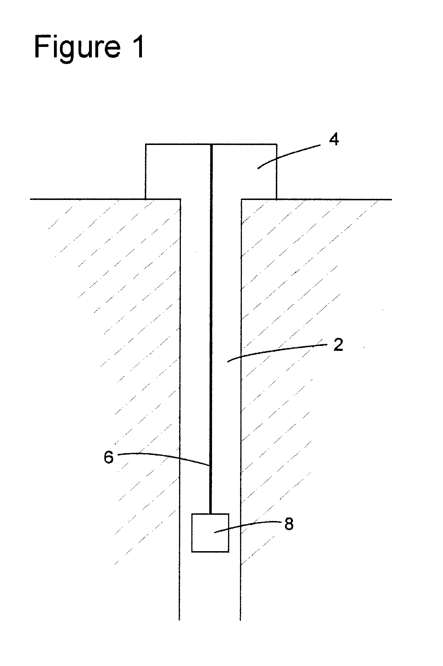

According to exemplary embodiments, two batteries or two battery packs can be used sequentially as needed in a piece of equipment. One environment in which this dual battery setup can be used is in downhole measurement and test equipment which can operate in, for example, drilled holes. Prior to describing exemplary systems and methods associated with the dual battery system, which can also be described as a reliable automatic reserve battery switch, a well hole in which the equipment can be used is now described with respect to Figure 1.

Figure 1, which is not to scale, illustrates a well hole 2, a drilling platform 4, a cable 6 and a downhole measurement equipment (or device) 8. In this example, the environment in the well hole 2 is such that the downhole measurement equipment 8 uses an internal power supply. The cable 6 is used for raising and lowering the downhole measurement equipment 8 in the well hole 2. The drilling platform 4 provides a stable platform from which to lower the downhole measurement equipment 8 into the well hole 2. Examples of downhole measurement equipment 8 can include devices which measure radiation, sound speed, resistivity, use magnetism and other types of equipment used in support of well operations and hydrocarbon exploration.

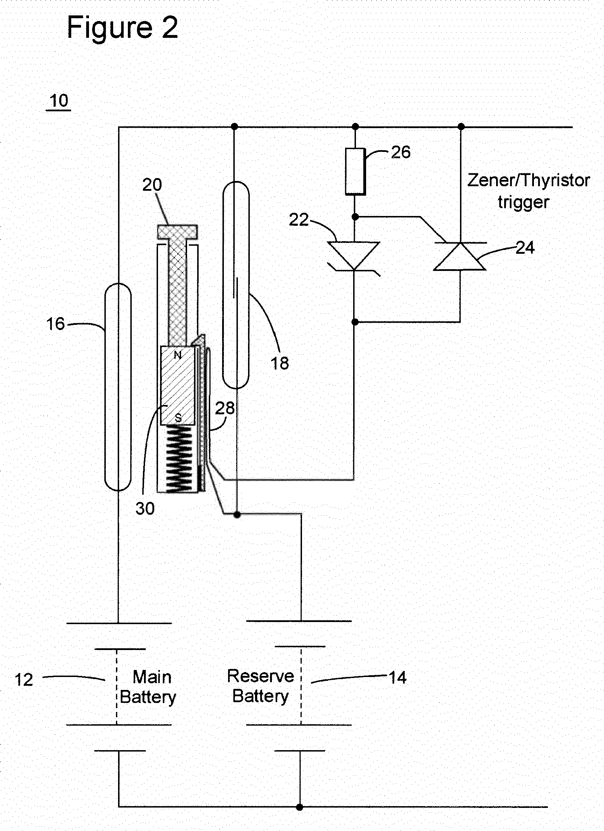

According to exemplary embodiments, the downhole measurement equipment 8 can include a circuit which allows the power supply to switch over from a first battery to a second battery. An example of the circuit 10 is shown in Figure 2. The circuit 10 includes a main or first battery 12, a reserve or second battery 14, two reed switches 16 and 18, a bi-metallic switch 20, a zener diode 22, a thyristor 24, a resistor 26 and a heating element 28. In general operation, only one battery is providing power to operate the downhole measurement equipment 8. The position of the bi-metallic switch 20 determines which of the reed switches 16 and 18 is open and which is closed. As shown in Figure 2, a magnet 30 associated with the bi-metallic switch 20 is close to reed switch 16 which keeps the reed switch 16 in a closed position. By way of contrast, the magnet 30 of the bi-metallic switch 20 is not close enough to the center of the reed switch 18 which leaves the reed switch 18 in an open position. By having reed switch 16 closed it allows the downhole measurement equipment 8 to be powered by the main battery 12.

According to exemplary embodiments, the main battery 12 and the reserve battery 14 can be eighteen volt batteries, however, other voltage batteries can be used. When the voltage of the main battery 12 has dropped a predetermined amount or a predetermined amount relative to the reserve battery 14, e.g., 2-3 volts, as determined by the resistor 26, the zener diode 22 and the thyristor 24, the thyristor 24 allows current to flow to the heating element 28 which in turn allows the bi-metallic switch 12 to move as is described in more detail below. Once the bi-metallic switch 12 moves to its open position, where the open position is when the magnet 30 is basically opposite from the center of the reed switch 18, the reed switch 18 closes allowing power from the reserve battery 14 to operate the downhole measurement equipment 8 and the reed switch 16 opens. When the reed switch 16 opens, the main battery 12 is no longer providing electrical power to the downhole measurement device 8. Additionally, the positioning of the reed switches 16 and 18 allow for a make before break action, with respect to the flow of electrical power from the batteries, so that there is no transient power loss.

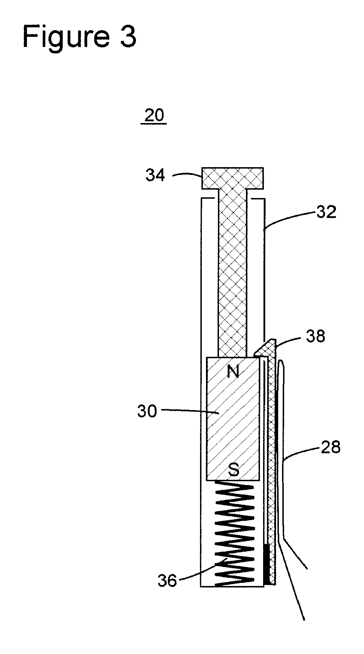

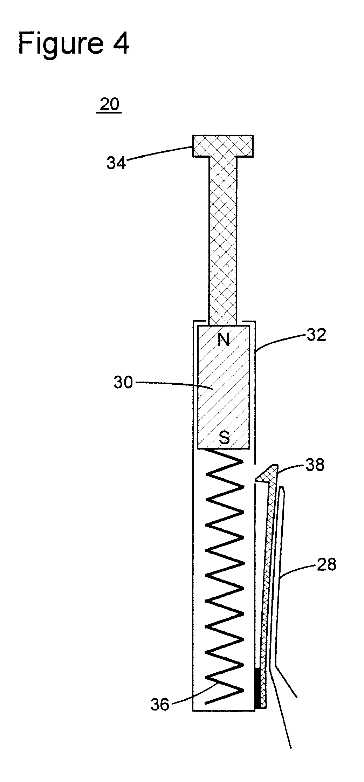

According to exemplary embodiments, the bi-metallic switch 20 can be in a closed position as shown in Figure 3 or in an open position as shown in Figure 4. When the bi-metallic switch 20 is in the closed position, the reed switch 16 is closed and the reed switch 18 is open. When the bi-metallic switch 20 is in the open position, the reed switch 16 is open and the reed switch 18 is closed. The bi-metallic switch 20 includes a magnet 30, a housing 32, a plunger section 34, a spring 36 and a bi-metallic latch 38. The heating element 28 is located near to the bi-metallic latch 38. When the predetermined voltage drop (which can be relative to the reserve battery 14) occurs in the main battery 14, current flows through the thyristor 24 to the heating element 28. This current heats the bi-metallic latch 38. According to exemplary embodiments, the bi-metallic latch 38 is made from two different metals (or alloys), e.g., steel with copper or steel with brass, each of which has a different coefficient of thermal expansion such that when heated the bi-metallic latch 38 bends away from the housing 32. This is shown by the different position of the bi-metallic latch 38 in Figures 3 and 4, i.e., the bi-metallic switch 20 in Figure 4 has been opened by sufficiently heating the bi-metallic latch 38 so that it bends and releases the magnet 30. This then allows the spring 36 to move the location of the magnet 30. According to exemplary embodiments, the heating time can be in the range of a few seconds.

According to exemplary embodiments, the circuit 10 provides for a simple, reliable and rugged design for a dual battery power supply for downhole measurement equipment 8. Using a bi-metallic latch 38 which can take 2 or more seconds to sufficiently heat for the required amount of bending to occur to release the magnet 30, allows for the reduction of accidentally switching batteries prematurely due to, for example, vibrations and/or other types of physical contact which the downhole measurement equipment 8 can encounter.

According to exemplary embodiments, after using the exemplary circuit 10 in the downhole measurement equipment 8 in a downhole environment, the circuit 10 can be inspected. If the bi-metallic switch 20 is in the closed position, the main battery 14 and the reserve battery 16 can be used again in their same positions respectively. If the bi-metallic switch 20 is in the open position, the main battery 14 has a significantly reduced charge (to the point of being undesirable for use) and the reserve battery 16 has some of amount of reduced charge. The reserve battery 16 can be moved into the position of the main battery 14, and a new, fresh battery can be placed into the position of the reserve battery 16 allowing for a more efficient, less costly use of batteries.

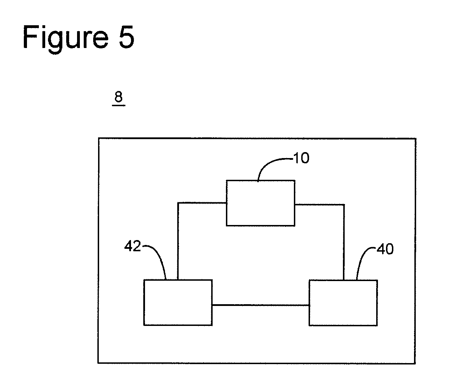

The exemplary embodiments described above provide an efficient, reliable dual battery powered system for use in downhole equipment. An exemplary downhole measurement equipment 8 will now be described with respect to Figure 5. The downhole measurement equipment 8 can include the circuit 10, a measurement function 40 and a memory 42. As described above, the circuit 10 provides electrical power to the downhole measurement equipment 8. The measurement function 40 can obtain measurement information associated with the formations around the drilled well hole 2. The measurement function 40 can include a processor for controlling the measurement function 40 and/or other functions associated with the downhole measurement equipment 8. Alternatively, the processor can be a separate physical piece from the measurement function 40 while still being able to communicate with both the measurement function 40 and the memory 42. The memory can be used for storing obtained measurement data and/or instructions for operating the downhole measurement equipment 8, e.g., when or where to turn on and off the measurement function 40.

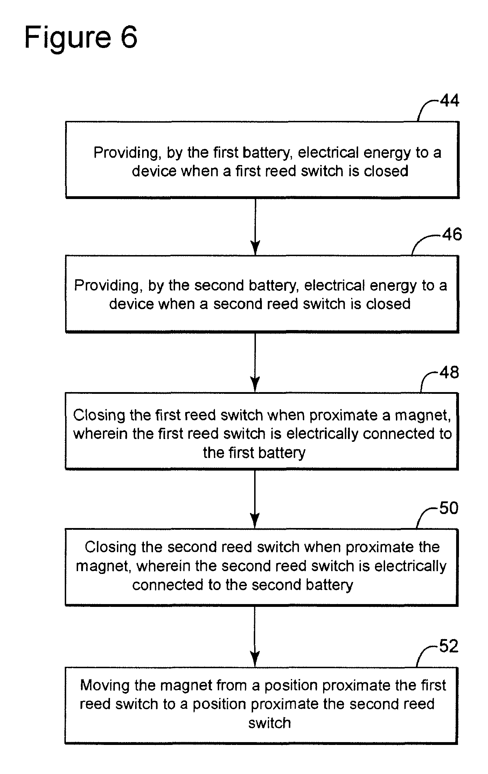

Using the above-described exemplary systems according to exemplary embodiments, a method for switching from a first battery to a second battery is shown in Figure 6. The method for switching from a first battery to a second battery includes: providing, by the first battery, electrical energy to a device when a first reed switch is closed in step 44; providing, by the second battery, electrical energy to a device when a second reed switch is closed in step 46; closing the first reed switch when proximate a magnet, wherein the first reed switch is electrically connected to the first battery in step 48; closing the second reed switch when proximate the magnet, wherein the second reed switch is electrically connected to the second battery in step 50; and moving the magnet from a position proximate the first reed switch to a position proximate the second reed switch in step 52. The above-described exemplary embodiments are intended to be illustrative in all respects, rather than restrictive, of the present invention. Thus the present invention is capable of many variations in detailed implementation that can be derived from the description contained herein by a person skilled in the art. All such variations and modifications are considered to be within the scope and spirit of the present invention as defined by the following claims. No element, act, or instruction used in the description of the present application should be construed as critical or essential to the invention unless explicitly described as such. Also, as used herein, the article "a" is intended to include one or more items.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

Various aspects and embodiments of the present invention are defined by the following numbered clauses:
1. A circuit for switching from a first battery to a second battery, the circuit comprising:
   the first battery configured to provide electrical energy to a device when a first reed switch is closed;
   the second battery configured to provide electrical energy to the device when a second reed switch is closed;
   the first reed switch electrically connected to the first battery and configured to close when proximate a magnet;
   the second reed switch electrically connected to the second battery and configured to close when proximate the magnet; and
   the magnet configured to be moved from a position proximate the first reed switch to a position proximate the second reed switch.
2. The circuit of clause 1, wherein the magnet is moved from the position proximate the first reed switch to the position proximate the second reed switch when a difference in the voltage between the first battery and the second battery reaches a predetermined value.
3. The circuit of clause 1 or clause 2, further comprising:
   a resistor;
   a thyristor; and
   a zener diode, wherein the resistor, the thyristor and the zener diode are configured to monitor the difference in the voltage between the first battery and the second battery.
4. The circuit of any preceding clause, further comprising:
   a heater configured to heat a bi-metallic latch;
   a switch configured to close either the first reed switch or the second reed, the switch includes:
      the magnet;
      a housing configured to house a spring and the magnet, wherein the housing has an opening for a portion of a bi-metallic latch; and
      the spring configured to move the magnet from the position proximate the first reed switch to the position proximate the second reed switch when the bi-metallic latch is not in sufficient contact with the magnet to counter a force exerted on the magnet by the spring; and
   the bi-metallic latch which includes two metals with different coefficients of thermal expansion, the bi-metallic latch configured to bend and release the magnet when sufficiently heated.
5. The circuit of any preceding clause, wherein the thyristor allows a current to flow to the heater.
6. The circuit of any preceding clause, wherein the circuit operates as a make before break circuit.
7. The circuit of any preceding clause, wherein the device is configured to operate without electrical energy being supplied to the device from an external power source.
8. The circuit of any preceding clause, wherein the device is a measurement device which is configured to operate in a downhole well environment.
9. The circuit of any preceding clause, wherein the predetermined value is substantially in the range of 2-3 volts.
10. A method for switching from a first battery to a second battery, the method comprising:
   providing, by the first battery, electrical energy to a device when a first reed switch is closed;
   providing, by the second battery, electrical energy to a device when a second reed switch is closed;
   closing the first reed switch when proximate a magnet, wherein the first reed switch is electrically connected to the first battery;
   closing the second reed switch when proximate the magnet, wherein the second reed switch is electrically connected to the second battery; and
   moving the magnet from a position proximate the first reed switch to a position proximate the second reed switch.
11. The method of any preceding clause, further comprising:
   moving the magnet from the position proximate the first reed switch to the position proximate the second reed switch when a difference in the voltage between the first battery and the second battery reaches a predetermined value.
12. The method of any preceding clause, wherein a resistor, a thyristor and a zener diode are configured to monitor the difference in the voltage between the first battery and the second battery.
13. The method of any preceding clause, further comprising:
   configuring a heater to heat a bi-metallic latch;
   configuring a switch to close the first reed switch or the second reed, the switch includes:
      the magnet;
      a housing configured to house a spring and the magnet, wherein the housing has an opening for a portion of a bi-metallic latch; and
      the spring configured to move the magnet from the position proximate the first reed switch to the position proximate the second reed switch when the bi-metallic latch is not in sufficient contact with the magnet to counter a force exerted on the magnet by the spring; and
      configuring, the bi-metallic latch which includes two metals with different coefficients of thermal expansion, to bend and release the magnet when sufficiently heated.
14. The method of any preceding clause, further comprising:
   allowing, by the thyristor, a current to flow to the heater.
15. The method of any preceding clause, wherein the circuit operates as a make before break circuit.
16. The method of any preceding clause, wherein the device is configured to operate without electrical energy being supplied to the device from an external power source.
17. The method of any preceding clause, wherein the device is a measurement device which is configured to operate in a downhole well environment.
18. The method of any preceding clause, wherein the predetermined value is substantially in the range of 2-3 volts.
19. A device configured to operate in a well hole, the device comprising:
   a circuit, the circuit includes:
      a first battery configured to provide electrical energy to the device when a first reed switch is closed;
      a second battery configured to provide electrical energy to the device when a second reed switch is closed;
      the first reed switch electrically connected to the first battery and configured to close when proximate a magnet;
      the second reed switch electrically connected to the second battery and configured to close when proximate the magnet; and
      the magnet configured to be moved from a position proximate the first reed switch to a position proximate the second reed switch;
   a measurement device configured to take measurements in the well hole; and
   a memory configured to store the measurements.
20. The device of any preceding clause, wherein the magnet is moved from the position proximate the first reed switch to the position proximate the second reed switch when a difference in the voltage between the first battery and the second battery reaches a predetermined value.

## Claims

1. A circuit for switching from a first battery to a second battery, the circuit comprising:
the first battery configured to provide electrical energy to a device when a first reed switch is closed;
the second battery configured to provide electrical energy to the device when a second reed switch is closed;
the first reed switch electrically connected to the first battery and configured to close when proximate a magnet;
the second reed switch electrically connected to the second battery and configured to close when proximate the magnet; and
the magnet configured to be moved from a position proximate the first reed switch to a position proximate the second reed switch.

2. The circuit of claim 1, wherein the magnet is moved from the position proximate the first reed switch to the position proximate the second reed switch when a difference in the voltage between the first battery and the second battery reaches a predetermined value.

3. The circuit of claim 1 or claim 2, further comprising:
a resistor;
a thyristor; and
a zener diode, wherein the resistor, the thyristor and the zener diode are configured to monitor the difference in the voltage between the first battery and the second battery.

4. The circuit of any preceding claim, further comprising:
a heater configured to heat a bi-metallic latch;
a switch configured to close either the first reed switch or the second reed, the switch includes:
the magnet;
a housing configured to house a spring and the magnet, wherein the housing has an opening for a portion of a bi-metallic latch; and
the spring configured to move the magnet from the position proximate the first reed switch to the position proximate the second reed switch when the bi-metallic latch is not in sufficient contact with the magnet to counter a force exerted on the magnet by the spring; and
the bi-metallic latch which includes two metals with different coefficients of thermal expansion, the bi-metallic latch configured to bend and release the magnet when sufficiently heated.

5. The circuit of any preceding claim, wherein the thyristor allows a current to flow to the heater.

6. The circuit of any preceding claim, wherein the circuit operates as a make before break circuit.

7. The circuit of any preceding claim, wherein the device is configured to operate without electrical energy being supplied to the device from an external power source.

8. The circuit of any preceding claim, wherein the device is a measurement device which is configured to operate in a downhole well environment.

9. The circuit of any preceding claim, wherein the predetermined value is substantially in the range of 2-3 volts.

10. A device configured to operate in a well hole, the device comprising:
a circuit according to any preceding claim,
a measurement device configured to take measurements in the well hole; and
a memory configured to store the measurements.

11. A method for switching from a first battery to a second battery, the method comprising:
providing, by the first battery, electrical energy to a device when a first reed switch is closed;
providing, by the second battery, electrical energy to a device when a second reed switch is closed;
closing the first reed switch when proximate a magnet, wherein the first reed switch is electrically connected to the first battery;
closing the second reed switch when proximate the magnet, wherein the second reed switch is electrically connected to the second battery; and
moving the magnet from a position proximate the first reed switch to a position proximate the second reed switch.

12. The method of claim 11, further comprising:
moving the magnet from the position proximate the first reed switch to the position proximate the second reed switch when a difference in the voltage between the first battery and the second battery reaches a predetermined value.

13. The method of claim 11 or claim 12, wherein a resistor, a thyristor and a zener diode are configured to monitor the difference in the voltage between the first battery and the second battery.

14. The method of any of claims 11 to 13, further comprising:
configuring a heater to heat a bi-metallic latch;
configuring a switch to close the first reed switch or the second reed, the switch includes:
the magnet;
a housing configured to house a spring and the magnet, wherein the housing has an opening for a portion of a bi-metallic latch; and
the spring configured to move the magnet from the position proximate the first reed switch to the position proximate the second reed switch when the bi-metallic latch is not in sufficient contact with the magnet to counter a force exerted on the magnet by the spring; and
configuring, the bi-metallic latch which includes two metals with different coefficients of thermal expansion, to bend and release the magnet when sufficiently heated.

15. The method of any of claims 11 to 14, further comprising:
allowing, by the thyristor, a current to flow to the heater.
